# EUROPÄISCHE PATENTANMELDUNG

(11) **EP 1 604 868 A1**
(43) Veröffentlichungstag der Anmeldung: **14.12.2005**
(21) Anmeldenummer: 05008024.1
(22) Anmeldetag: 13.04.2005
(51) Int. Cl.: B60R 11/02

(54) **Gerätehalter für Kleincomputer oder dergl. mit verstellbaren Klemmbacken**

(30) Priorität: 09.06.2004 DE 102004028025
(71) Anmelder: Richter, Harald, 75331 Engelsbrand (DE)
(72) Erfinder: Richter, Harald, 75331 Engelsbrand (DE)
(74) Vertreter: Gallo, Wolfgang

(57) **Zusammenfassung**

Gerätehalter für Kleincomputer oder ähnliche Geräte, mit einem Plattenkörper (1) zum Auflegen des Geräts, und mit zwei beiderseits des Plattenkörpers abstandsveränderlich angeordneten Backen (2) zum beiderseitigen Halten des Geräts, wobei jede Backe an ihrer Innenseite ein in Richtung des Plattenkörperrands verschiebbares Schiebeteil (24) aufweist oder insgesamt in Richtung des Plattenkörperrands verschiebbar auf einem Backenträger angeordnet ist, und wobei vorzugsweise jede Backe ein senkrecht zum Plattenkörper verstellbares Backenteil (22) aufweist.

## Beschreibung

Die Erfindung betrifft einen Gerätehalter für Kleincomputer, wie sie als "PDA" (Personal Digital Assistent) bezeichnet werden oder ähnliche Geräte wie mobile Navigationsgeräte, Mobiltelefone und dergleichen.

Solche Gerätehalter sind allgemein bekannt. Sie sind üblicherweise auf einem Träger, beispielsweise mit biegsamem Arm oder einem Gelenkmechanismus, angeordnet, so dass sie in die gewünschte, gewöhnlich geneigte Stellung gestellt werden können, und sie bestehen aus einem Plattenkörper, der eine Auflagefläche für das zu haltende Gerät bildet und an seinem in Gebrauchslage untenliegenden Ende Anschlagfinger zum Abstützen des Geräts an dessen unterm Rand aufweist, sowie außerdem zwei beiderseits angeordnete Klemmbacken aufweist, die federnd in Richtung zueinander hin vorgespannt sind und das Gerät an seinen beiden Seiten klemmend erfassen. Der Plattenkörper ist als flacher Hohlkasten ausgebildet und nimmt die Führung für die Klemmbacken sowie den Mechanismus zu deren Vorspannung und zum Ermöglichen des Öffnens derselben in eine aufgespreizte Position zum Einlegen oder Herausnehmen des Geräts auf.

Solche Gerätehalter werden hauptsächlich in Fahrzeugen zur zeitweiligen Halterung von Geräten benutzt, die der Benutzer üblicherweise auch außerhalb des Fahrzeugs mit sich führt. Dabei soll der Gerätehalter universell einsetzbar sein, d.h. zur Halterung von Geräten verschiedener Hersteller und unterschiedlicher Gattung gleichermaßen geeignet seien. Dazu ist es notwendig, dem Umstand Rechnung zu tragen, dass solche unterschiedlichen Geräte nicht nur in ihren äußeren Abmessungen wie Breite und Höhe recht unterschiedlich sein können, sondern dass insbesondere auch Kabelanschlüsse, Buchsen und Steckeraufnahmen sowie Bedienungselemente an unterschiedlichen Positionen entlang der Geräteseiten angeordnet sind und auch die Dicke solcher in Flachbauweise ausgeführter Geräte unterschiedlich ist.

Bekannte Gerätehalter können diesem Erfordernis aber nicht entsprechen, weil die Klemmbacken notwendigerweise, um das Gerät ohne Beeinträchtigung halten zu können, eine relativ große Breite haben müssen, und weil außerdem der den Backen zugeordnete, im Plattenkörper untergebrachte Mechanismus im Plattenkörper verankert sein muß und daher die Anordnung der Backen in einer zwar wählbaren, aber ansonsten feststehenden Position zwischen unterem und oberem Rand des Plattenkörpers erfordert.

Der Erfindung liegt daher die Aufgabe zugrunde, trotz der gegebenen notwendigen positionsmäßigen Festlegung des Backenbetätigungsmechanismus die Flexibilität des Zusammenwirkens der Backen mit den Seitenbereichen eines eingelegten Geräts und damit die universelle Verwendbarkeit des Gerätehalters deutlich zu verbessern.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Bei dem erfindungsgemäßen Gerätehalter weisen also die Backen in Längsrichtung des Gerätehalters, d.h. parallel zu den Gerätehalterseiten, verschiebbare Elemente auf, oder die Backen selbst sind auf Backenträgerelementen entsprechend verschiebbar angeordnet, und vorzugsweise sind die Backen auch in Richtung senkrecht zur Hauptebene des Plattenkörpers verstellbar.

Die Erfindung wird nachstehend unter Bezugnahme auf die anliegenden Zeichnungen mehr im einzelnen beschrieben. In den Zeichnungen zeigt:
- Fig. 1: eine Seitenansicht des Gerätehalters,
- Fig 2: eine Seitenansicht des Gerätehalters ähnlich Fig. 1 mit verstellten Backen, und
- Fig. 3: eine perspektivische Darstellung des Gerätehalters, wobei das längsverschiebliche Backenelement und seine Handhabung dargestellt ist.

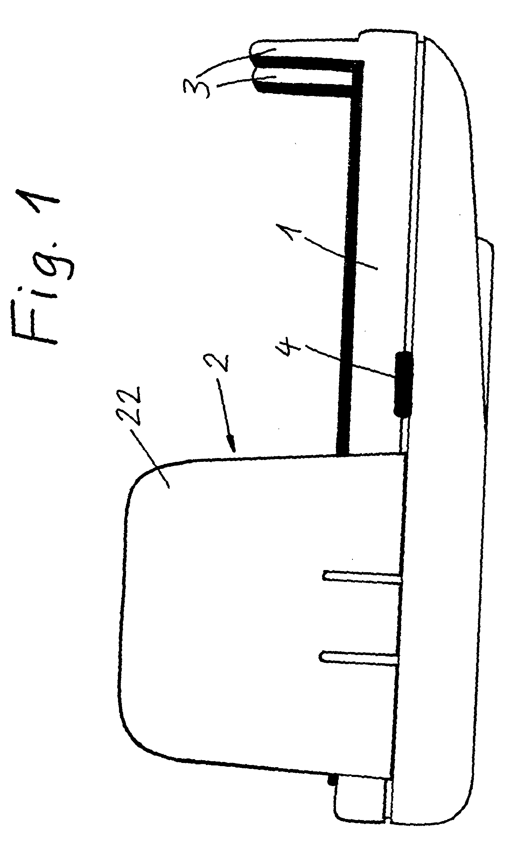

Fig. 1 zeigt einen Gerätehalter nach der Erfindung in Seitenansicht. Er besteht aus einem hohlkastenförmigen Plattenkörper 1, zwei an dessen gegenüberliegenden Seiten angeordneten Backen, von denen eine (die linke) dargestellt ist, und zwei Stützfingern 3 am einen (in der Zeichnung rechten) Ende des Gerätehalters, das sich in der üblicherweise geneigten Gebrauchslage des Gerätehalters unten befindet. In dem hohlkastenförmigen Plattenkörper 1 ist ein Mechanismus untergebracht, der das synchrone Bewegen der beiden Backen 2 in Richtung ihres Abstands ermöglicht. Dieser Mechanismus ist an sich bekannt und daher nicht dargestellt. Er umfaßt einen Ratschenmechanismus und einen Federmechanismus. Der Federmechanismus spannt die Backen 2 in Öffnungsrichtung vor, das heißt im Sinne einer Vergrößerung ihres Abstands. Ein in Fig. 1 sichtbarer, an einer Seite des Plattenkörpers 1 angebrachter Betätigungsknopf 4 dient zum Auslösen des Öffnens der Backen 2, die sich darauf unter der Einwirkung des Federmechanismus in ihre vollständig geöffnete Stellung aufspreizen. Zum Fixieren eines Geräts auf dem Gerätehalter werden die beiden Backen 2 nach dem Auflegen des Geräts auf den Plattenkörper 1 manuell in Richtung aufeinander zu zusammengedrückt, bis sie an den beiden Seiten des Geräts anliegen. Um das Gerät elastisch und verrutschsicher zu halten, können die Backen an ihren einander zugewandten inneren Seiten mit einer Moosgummiauflage oder dergleichen versehen sein.

Die beiden Backen 2 sind in ihrer Ausdehnung senkrecht zur Auflagefläche 11 des Plattenkörpers 1 verstellbar. Fig. 1 zeigt die Backen 1 in ihrer eingeschobenen, also am wenigsten weit von der Auflagefläche 11 des Plattenkörpers vorspringenden Position, und Fig. 1 zeigt die Backen in einer ausgezogenen, also deutlich weiter von der Auflagefläche 11 des Plattenkörpers vorspringenden Position.

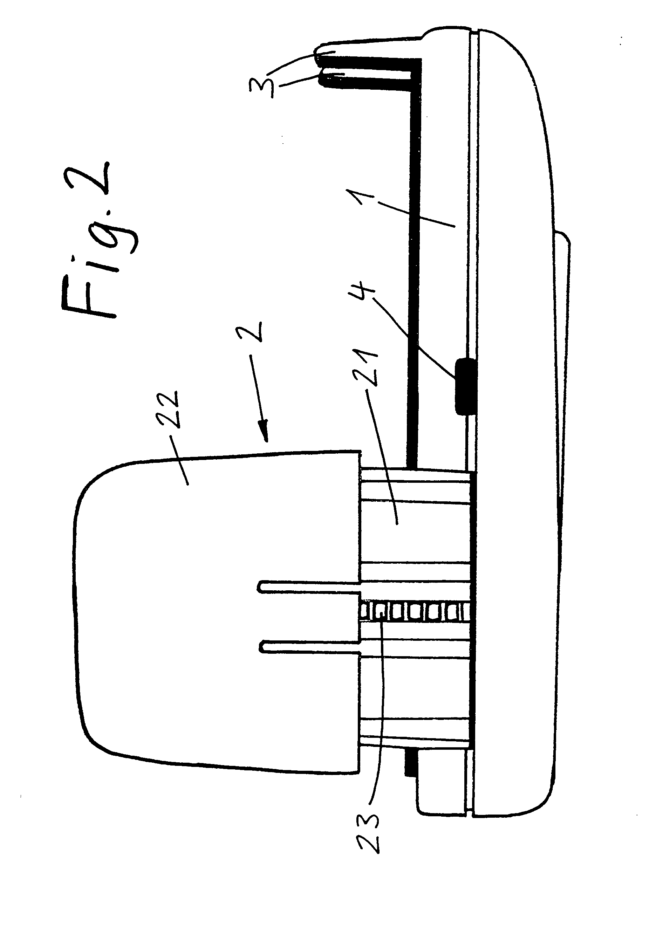

Dazu bestehen die Backen 2 jeweils aus einem Basisteil 21 und einem relativ dazu senkrecht zur Auflagefläche 11 des Plattenkörpers verstellbaren Backenteil 22. In Fig. 2 ist auch der am Basisteil 21 der dargestellten Backe 2 angeordnete Teil eines Rastenmechanismus sichtbar, der zum Verstellen des Backenteils 22 relativ zum Backenteil 21 in der Rastenteilung entsprechenden kleinen Stufen dient. Es versteht sich, dass auch andere Ausführungsformen oder Anordnungen eines Rastenmechanismus zwischen den beiden Backenteilen 21 und 22 möglich ist.

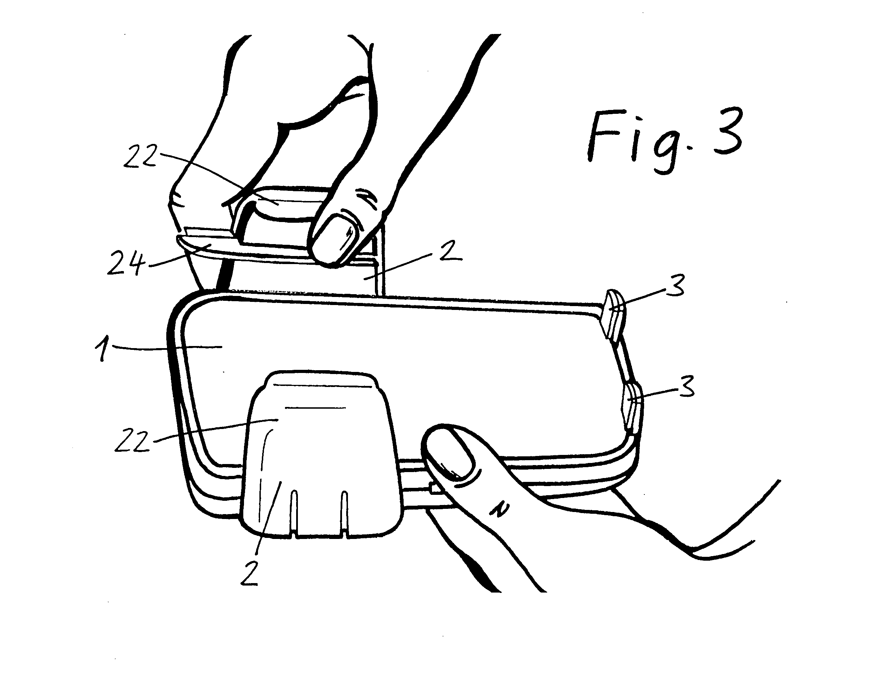

In der perspektivischen Darstellung nach Fig. 3 ist die innere Seite der rechten Backe 2 sichtbar. Wie man dort sieht, weist jede Backe an ihrer Innenseite ein in Längsrichtung des Plattenkörpers verschiebbares Schiebeteil 24 auf, das in dem relativ zur Auflagefläche 11 des Plattenkörpers 1 verstellbaren Backenteil 22 verschiebbar geführt ist. Dieses Schiebeteil 24 ist beim dargestellten Ausführungsbeispiel in seiner Länge so bemessen, dass es der Breite der Backen entspricht, es kann jedoch auch eine größere Länge als die Backenbreite haben. Das Schiebeteil 24 ist in beiden Richtungen, also in Richtung zu beiden Enden des Plattenkörpers hin, wahlweise und nach Bedarf verschiebbar, um die Backe zum einen oder anderen Ende des Plattenkörpers hin zu verbreitern. Beim dargestellten Ausführungsbeispiel kann das Schiebeteil 24 sowohl in der einen als auch in der anderen Richtung vollständig aus seiner Führung in dem Backenteil 22 herausgeschoben und dadurch von der Backe abgenommen werden. Es können aber auch Begrenzungsanschläge zum begrenzen des möglichen Schiebewegs vorgesehen sein (nicht dargestellt).

Beim dargestellten Ausführungsbeispiel ist das Schiebeteil 24 als relativ schmaler Steg und relativ zur inneren Backenfläche einwärts vorspringend ausgebildet. In dieser Ausführung dient das Schiebeteil als Rückhalteorgan, das ein ungewolltes Abheben des Geräts von der Auflagefläche des Plattenkörpers und somit auch ein Herausfallen des Geräts beispielsweise bei starken Erschütterungen verhindert. Es versteht sich aber, dass das Schiebeteil auch in anderer Weise ausgebildet sein kann, nämlich mit beliebig größerer Breite und/oder so, dass es nicht über die innere Backenfläche vorspringt. Weiter ist es möglich, verschiedene austauschbare und unterschiedlich ausgebildete Schiebeteile für eine Backe vorzusehen, um unterschiedlichen Anwendungsfällen zu entsprechen.

Anstelle einer Ausführungsform der dargestellten Art, bei welchem die Backen 2 jeweils mit einem Schiebeteil 24 ausgestattet sind, ist alternativ eine Ausführungsform (nicht dargestellt) möglich, bei welcher jede Backe insgesamt parallel zum Plattenkörperrand verstellbar ist. Bei dieser Ausführungsform weist die Backenanordnung für jede Backe einen Backenträger auf, wobei die Backenträger in Richtung des Backenabstands verschiebbar sind und jeweils eine Backe relativ dazu längs des Plattenkörperrands in der einen oder anderen Richtung verschiebbar führen.

Der Plattenkörper 1 weist an seiner Unterseite Mittel (nicht dargestellt) zur Verbindung mit einem Tragarmkopf oder dergl. auf.

## Patentansprüche

1. Gerätehalter für Kleincomputer oder ähnliche Geräte, mit einem Plattenkörper (1) mit einer Auflagefläche (11) für das Gerät, weiter mit zwei beiderseits des Plattenkörpers angeordneten Backen (2), die im Sinne einer Veränderung ihres gegenseitigen Abstands relativ zueinander bewegbar sind, und mit mindestens einem an einer dritten Seite des Plattenkörpers angeordneten und einen Anschlag für das Gerät bildenden Element (3), wobei jede Backe (2) an ihrer Innenseite mit einem daran parallel zum Plattenkörperrand verschiebbar geführten Schiebeteil (24) ausgestattet ist.

2. Gerätehalter nach Anspruch 1, wobei das Schiebeteil (24) eine Länge hat, die gleich oder größer als die Backenbreite ist.

3. Gerätehalter nach Anspruch 1 oder 2, wobei das Schiebeteil (24) einen mit Bezug auf die Backenfläche einwärts vorspringenden Steg bildet.

4. Gerätehalter nach einem der Ansprüche 1 bis 3, wobei das Schiebeteil (34) vollständig aus der Backe herausschiebbar ist.

5. Gerätehalter für Kleincomputer oder ähnliche Geräte, mit einem Plattenkörper (1) mit einer Auflagefläche (11) für das Gerät, weiter mit zwei beiderseits des Plattenkörpers angeordneten Backen (2), die im Sinne einer Veränderung ihres gegenseitigen Abstands relativ zueinander bewegbar sind, und mit mindestens einem an einer dritten Seite des Plattenkörpers angeordneten und einen Anschlag für das Gerät bildenden Element (3), wobei jede Backe auf einem in Richtung des Backenabstands verschiebbaren Backenträger parallel zum Plattenkörperrand verschiebbar geführt ist.

6. Gerätehalter nach einem der Ansprüche 1 bis 5, wobei jede Backe aus einem Basisteil (21) und einem daran senkrecht zur Auflagefläche (11) des Plattenkörpers (1) verstellbaren Backenteil (22) besteht.

7. Gerätehalter nach Anspruch 6, wobei ein zwischen dem Basisteil (21) und dem verstellbaren Backenteil (22) angeordneter Rastenmechanismus (23) eine Verstellbarkeit des verstellbaren Backenteils in kleinen Schritten ermöglicht.
